# EUROPEAN PATENT APPLICATION

(11) **EP 4 283 791 A1**
(43) Date of publication of application: **29.11.2023**
(21) Application number: 23174154.7
(22) Date of filing: 18.05.2023
(51) Int. Cl.: H01R 4/70, H01R 12/59, C09J 7/38, H02B 1/00, H05B 1/00, H05B 3/86

(54) **ELECTRICAL CONNECTION**

(30) Priority: 23.05.2022 GB 202207520
(71) Applicant: Strip Tinning Limited, West Midlands B45 0JA (GB)
(72) Inventor: PRICE, Geoff, Birmingham, B45 0JA (GB); POPILIAN, Denis, Birmingham, B45 0JA (GB)
(74) Representative: HGF

(57) **Abstract**

An electrical connection (1) for electrically connecting a flat connector (2) and an electrical cable (3), the electrical connection (1) comprises
a flat connector (2) with an insulated portion (21) and an electrically conductive portion (20e) to which is secured a pressure sensitive adhesive (6) defining a window (6w),
an electrical cable (3) which is secured to the flat connector (2) at the window (6w) to provide an electrical contact between the flat connector (2) and the electrical cable (3), and
an enclosure (4) encasing the electrical contact.

## Description

This invention relates to an electrical connection. More specifically, although not exclusively, this invention relates to an electrical connection for joining a flat connector to an electrical cable.

Electrical connections as described herein are used in various ways. One of those uses is for electrically connecting flat connectors and electrical cables to be used in heated windscreen assemblies, in which heating elements are disposed within the glass laminates of the windscreen. Electricity supplied to the heating elements causes resistive heating which heats the glass and hence melts snow or ice and/or evaporates fog or mist which inhibits driver visibility. Accordingly, it is necessary to supply the metal wires with electricity. The flat connectors provide electrical connection to the heating elements within the glass laminate of the windscreen while the electrical cables provide electrical connection between the flat connectors and a source of electrical energy, e.g. an automobile battery.

Because of the location of the electrical connection it is essential that the electrical connection is able to withstand environmental conditions such as water, thermal cycling, humidity and chemical use (for example, salt from road traffic spray, de-icer compositions and so on) and the physical requirements of installation in a windscreen assembly and use in a motor vehicle environment. It is particularly important that the electrical connection does not corrode through exposure to water and/or other undesirable elements as corrosion may lead to increased resistance and hence reduced efficiency of electrical transfer, and, in extreme cases failure of the electrical connection. Example of a structures for connecting electrical cables to a flat electrical cable are described in EP1058349A1 and EP1619759A1. Another such structure which shows good resistance to environmental conditions is shown in our earlier patent application EP3182520.

Formation of a heated windscreen assembly entails heating a laminate of two glass panes (which may be separated by a polymeric layer of poly-vinyl butyral (PVB)) in an autoclave in order to bond the glass lamina together. The electrical connection is commonly formed and affixed to one (or both) of the glass lamina at a prior stage and is hence located within the autoclave during bonding. As a result, it is essential that the electrical connection is able to withstand the 150°C temperature within the autoclave for the period of heating (which may be around three hours).

It can also be a problem to accurately locate an electrical cable relative to a flat connector prior to forming an electrical connection betwixt the two members. Furthermore, the electrical connection must be durable enough to withstand potential physical shocks during installation and/or use thereof.

It is an object of the current invention to provide an electrical connection which has a high degree of physical resilience to temperature and to physical shock. It is an additional or alternative object of the invention to provide an electrical connection which is protected from potentially corrosive elements such as water and/or species entrained (e.g. dissolved) in water and, preferably, which demonstrates improved resistance.

Accordingly, a first aspect of the invention provides an electrical connection for electrically connecting a flat connector, and an electrical cable, the electrical connection comprising
a flat connector with an insulated portion and an electrically conductive portion to which is secured a pressure sensitive adhesive defining a window,
an electrical cable which is secured to the flat connector at the window to provide an electrical contact between the flat connector and the electrical cable, and
an enclosure encasing the electrical contact.

A second aspect of the invention provides a method of forming an electrical connection for electrically connecting a flat connector to an electrical cable, the method comprising:
providing a flat connector having an insulated portion and an exposed portion;
securing a pressure sensitive adhesive to the exposed portion to define a window;
securing an electrical cable to the window to form an electrical contact; and
encasing the electrical contact within an enclosure.

The window is preferably bounded on all sides by the pressure sensitive adhesive.

The pressure sensitive adhesive is preferably an acrylic adhesive. The adhesive may be less than 100 µm thick, for example from 10 to 90 µm thick, say from 20, 30, 40 to 80, 70, 60 µm thick. In an embodiment the adhesive may be from 40 to 60 µm thick, say 50 µm thick. It was surprisingly found that the use of such a thin layer of pressure sensitive adhesive is capable of imparting enhanced sealing characteristics to the electrical connection.

Pressure sensitive adhesives are, typically, fully cured before the electrical contact is encased within an enclosure. Advantageously, we have found that the provision of a pressure sensitive adhesive provides a suitable surface to effectively seal the electrical contact, especially when using overmoulding to provide the enclosure because it forms a robust connection which is not (or at least is less) susceptible to the effects of water ingress.

We prefer to use pressure sensitive adhesives rather than those that are cured by the action of heat (for example the heat used during the process of overmoulding) because it can decrease overmoulding cycle time whilst ensuring a robust (and we believe more robust) connection.

The adhesive may extend over the end or marginal portion of the material forming the insulated portion. Advantageously, the adhesive will ensure that the risk of delamination of the insulated material is reduced.

The electrical cable may comprise an electrically conductive core encased in a thin layer of non-conductive material to provide an exposed portion. The exposed portion of the electrical cable may be secured to the window. The exposed portion of the electrical cable may be secured to the window by solder, for example a lead-free solder or a lead-containing solder. It is preferred that a lead-free solder is used, for example a lead-free solder comprising one of more of silver, tin, bismuth, indium, copper. In an embodiment the solder may be formed from tin and silver. In another embodiment the solder may be formed of tin, silver and bismuth. In a further embodiment the solder may be formed from tin.

The electrical cable, for example at least a portion of non-conductive material of the electrical cable, may have an adhesive, preferably a pressure sensitive adhesive, located thereon, for example, at least partially and preferably fully thereabouts. Preferably the adhesive, e.g. the pressure sensitive adhesive, will extend from the terminus of the non-conductive material away from the exposed portion. The adhesive may extend for a distance of less than 10mm, for example from 0.05 to 9.5mm, say 0.1 to 9, 8, 7mm along the non-conductive material. This has been found to be advantageous when encasing the electrical contact by an enclosure because it forms a robust connection which is not (or at least is less) susceptible to the effects of water ingress. We have found that a particularly good seal can be achieved with an adhesive which extends between 2 and 8 mm, preferably between 3 and 7 mm along the cable. The adhesive is preferably less than 100 µm thick, for example from 10 to 90 µm thick, say from 20, 30, 40 to 80, 70, 60 µm thick. In an embodiment the adhesive may be from 40 to 60 µm thick, say 50 µm thick.

In particular, because of the location of the adhesive on the cable it can contact a facing portion of the adhesive defining the window on the electrically conductive portion of the flat connector. The combination of these two adhesives being in contact has been proven to deliver a very robust seal which is resistant to water ingress in use.

The adhesive on the cable may, and preferably does, extend beyond the end of the electrically conductive portion of the flat connector.

The thin layer of non-conductive material of the electrical cable may have a thickness of less than 1 mm, for example less than 0.9, 0.8, 0.7, 0.6, 0.5, 0.4, 0.3, 0.2, 0.1 mm.

The insulated portion of the flat connector may comprise a polymeric material, for example made from polyimide. Polyimide is useful because it is electrically insulating and is resistant to the temperatures to which a windscreen is exposed in a autoclave.

The polymeric film may have a thickness of from 20 to 60 × 10⁻⁶m (i.e. from 20 to 60 µm), say from 25 to 55, 30 to 52, 35 to 51 or 40 to 50 µm. In particular, we have found a particularly useful polymeric film to comprise a polymeric tape which has an epoxy adhesive applied thereto. The polymeric tape, which may be formed from polyimide, has a thickness of from 15 to 35 µm, preferably 20 to 30 µm, and the adhesive may have a thickness of from 10 to 30 µm, for example from 15 to 25 µm.

The flat connector may comprise a flat strip of electrically conductive material, a major portion of the flat strip may be covered to provide the insulated portion and a minor portion of the flat strip is not covered to provide the exposed portion. The exposed portion is preferably at one end of the flat connector.

The flat strip of electrically conductive material may be formed from a metal, e.g. copper, which may, for example, be provided with a thin cover layer (e.g. of or comprising tin).

The flat strip of electrically conductive material preferably has a cross sectional area of less than 3 mm², preferably less than 2.75, less than 2.5, less than 2.25, less than 2, for example less than 1.95, less than 1.9, less than 1.85 or less than 1.8 mm². The flat strip of electrically conductive material preferably has a cross sectional area of between 1.0 or 1.5 and 4mm², say from 1.5 to 3 mm², say from 1.5 to 2.5mm².

In one embodiment the flat strip of electrically conductive material has a thickness of from 80 to 120 × 10⁻⁶m (i.e. from 80 to 120 µm), say from 85 to 118, 90 to 115, 95 to 113 µm.

The flat strip of electrically conductive material preferably has a width of from 10 to 30 mm, say from 12 to 28 mm, for example from 14 to 25 mm.

The Polymeric film may be larger than the flat strip so as to provide a peripheral border therearound, for example a peripheral border of from 0.5 to 3 mm, say from 1 to 2.5 mm. This provides a robust seal around the flat strip of electrically conductive material.

The electrically conductive portion of the flat connector may have a first major surface and a second major surface. The first major surface may be the one to which the cable is secured.

The second major surface of the electrically conductive portion may comprise an adhesive. The adhesive may be located on the second major surface so as to provide a second window (i.e. an adhesive-fee window). The second window may be located to correspond to the window. The second window may be the same size or smaller in area than the window.

The adhesive may be located on the electrically conductive portion by adhering the adhesive using an adhesive located on a release liner. The release layer may be a siliconized Kraft paper or other release layer which does not adhere to the adhesive.

In a preliminary step, the release liner and the adhesive located thereon may be perforated to define a window.

The release liner and adhesive may be provided as an adhesive strip. The adhesive strip may be perforated plural times to form a perforated adhesive strip.

The flat connectors may be provided as a strip of plural flat connectors. The strip of plural flat connectors may be longitudinally aligned in a side-by-side arrangement. The strip of plural flat connectors may be provided such that plural exposed portions are located in side-by-side arrangements.

The perforated adhesive strip may be secured to the plural exposed portions.

The perforated adhesive strip may be secured to a first side of the plural exposed portions.

A further adhesive strip, for example a further perforated adhesive strip, may be secured to a second side of the plural exposed portions.

Advantageously, because the adhesive strip, e.g. the perforated adhesive strip, comprises (or at least preferably comprises) a continuous length of adhesive, when securing the adhesive strip (or perforated adhesive strip) to the first and second sides of the plural exposed portions the first side and second side adhesives will adhere to one another between adjacent exposed portions of the plural exposed portions. This ensures that the adhesive is more likely to adhere effectively to the exposed portions, especially if, say, pressure is applied along the strip after bringing the strip and exposed portions into contact.

Individual flat connectors having adhesive secured to the exposed portion thereof may be separated from the strip of plural flat connectors.

The electrical cable may comprise a free end, e.g. connected or connectable to electrical components and/or a source of electrical power. The flat connector may comprise a free or second end, e.g. connected or connectable to electrical components, for example to one or more busbars or other electrical components. The free or second end of the flat connector may be located or locatable within a windscreen, e.g. electrically connected to electrical components disposed therein.

The enclosure may comprise a unitary body, for example where the unitary body is overmoulded around the point of contact, the cable and the flat connector.

The enclosure may comprise an enclosure material which is a rigid material, e.g. a material suitable to protect the electrical join from physical shocks. Additionally or alternatively the enclosure may comprise an enclosure material which is flexible, e.g. a material able to withstand the stresses generated upon flexure of the electrical cable and/or of the flat connector. Preferably the enclosure material is a thermoplastic, e.g. a polyamide, for example polyamide 6 (PA6), polyamide 6/6 (PA66), polybutylene terephthalate (PBT), polypropylene, Macromelt (RTM) and the like. Indeed, one or more of the polymers may comprise glass fibres, particles, microbeads or microspheres (which we call glass-filled polymer (GFP) or glass-reinforced polymer (GRP)), for example glass-reinforced polyamide or glass-reinforced polypropylene. We prefer glass-reinforced polymers because we believe it increases the softening point of the polymer, which is beneficial from a processing, aesthetic and finished product point of view and, surprisingly, it may yield a product better able to withstand environmental factors in use.

Preferably the enclosure comprises a continuous outer surface which is interrupted only by a first aperture through which the electrical cable extends and a second aperture through which the flat connector extends.

Where the cable is provided with an adhesive thereabout, the enclosure will preferably encase the adhesive surrounding or provided upon the cable.

A further aspect of the invention provides a windscreen assembly comprising an electrical connection as described above, e.g. and further comprising glass laminates and heating elements.

For the avoidance of doubt, any of the features described herein apply equally to any aspect of the invention. Furthermore, any electrical connection according to the invention may include plural flat connectors and/or plural electrical cables.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. Features described in connection with one aspect or embodiment of the invention are applicable to all aspects or embodiments, unless such features are incompatible.

Embodiments of the invention will now be described by way of example only with reference to the accompanying drawings in which:
Figure 1A is a diagrammatic plan view of an electrical connection according to a first embodiment of the invention;
Figure 1B is a diagrammatic side view of the electrical connection of Figure 1A;
Figure 1C is a diagrammatic cut-away plan view of the connection of Figure 1A from a first side;
Figure 1D is a diagrammatic cut-away plan view of the connection of Figure 1A from a second side;
Figures 2A to 2E provide views of the stages of a method of manufacturing the electrical connection of Figure 1A;

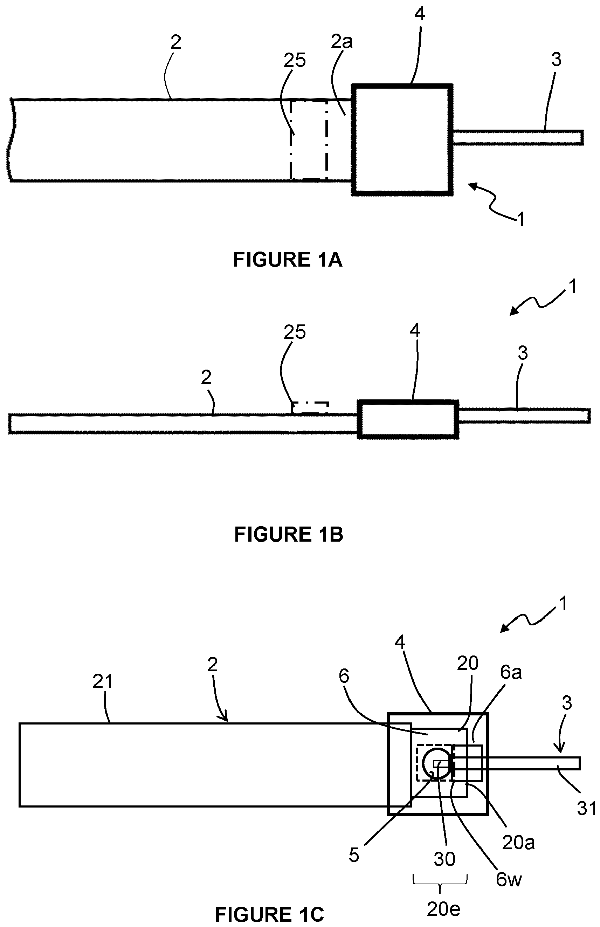

Referring firstly to Figures 1A and 1B, there is shown an electrical connection 1 according to one embodiment of the invention for electrically and mechanically joining a flat connector 2 to an electrical cable 3 at a first end 2a of the flat connector 2. The electrical connection 1 in the region of the first end 2a of the connector 2 is protected by an enclosure 4. The flat connector 2 has a second end (not shown), connected or connectable to electrical components, for example to one or more busbars or other electrical components.

Referring now to Figure 1C, there is shown a cut-away view of the electrical connection 1 of Figures 1A and 1B, where the flat connector 2 comprises of a flat electrically conductive element 20 encased by a thin layer of electrically insulating material 21 to leave a free or exposed end portion 20e. The electrical cable 3 comprises an electrically conductive wire 30 of generally cylindrical form, e.g. of a generally circular cross-section surrounded by a thin layer of insulating material 31. Other shapes of cable 3 and connector 2 are possible, with the proviso that, at least in most cases, the connector 2 is flat or substantially flat and/or provides a flat conductive surface to which the cable 3 is to be attached. In this specification, by 'flat' we mean that the cross sectional width (W) of the connector is greater than the cross sectional depth or thickness (D), preferably where W>10D, say W>50D.

In a preferred embodiment the electrically conductive element 20 is flat and is from 5 to 40mm, *e.g.* 10 to 30mm, say 15 to 20mm, *e.g.* 17 mm, wide and about 10 to 1000 microns (1 micron is 10⁻⁶m), say 50 to 500 microns, for example 100 microns thick, and is preferably formed from copper, which may or may not be coated. If the electrically conductive element 20 is coated, it may be coated with a protective substance, for example a substance capable of imparting at least a degree of environmental protection. One such coating material is tin or an alloy thereof. The insulating material 21 is preferably marginally wider than the electrically conductive element 20, for example to leave a marginal border outboard of the electrically conductive element 20 along the edges of the electrically conductive element 20. In an embodiment where the electrically conductive element 20 is 17 mm wide, the insulating material may be from 18 to 30mm wide, e.g. 21 to 25 mm wide (for example 22 or 23mm wide), and from 20 to 80, say 40 to 50 microns, e.g. 45 microns, thick at each major surface of the electrically conductive element 20. The insulating material 21 is preferably formed from a temperature-stable plastics material. One such plastics material is polyimide. The insulating material 21 may conveniently be formed from Kapton (RTM) film supplied by E.I. Dupont of Delaware, USA. The flat connector 2 may also include an adhesive patch 25 for attaching the flat connector to a site of use. The adhesive patch 25, where provided, may be located about 3mm from an end of the insulating material 21 towards the second end of the connector 2. The adhesive patch 25, where provided, may be covered by a release liner (not shown). The adhesive patch 25, when exposed by removal of the optional release liner, may help to ensure accurate location of the flat connector 20 at a site of use. For example, the optional release liner may be removed to expose the adhesive patch 25 which can then be used to secure the electrical connection 1 at a site of use (e.g. on a windscreen component) whilst other components (for example a further pane of a windscreen) are assembled.

The flat connector 2 has an exposed portion or exposed end 20e of electrically conductive element 20 at its first end 2a. The exposed end 20e of the conductive material 2 may be from 2 to 20 mm long, e.g. from 5 to 18 mm long and in one embodiment is about 9 or 10 mm long. It will be appreciated that whilst the exposed portion 20e is shown as being of rectangular form it may also be other shapes. For example, the exposed end portion 20e may be of trapezoidal form.

The exposed portion 20e has an adhesive 6 located thereon. The adhesive 6 is provided around the exposed portion 20e to define a window 6w, which window 6w is preferably inboard of the edges of the exposed portion 20e. The window 6w may be surrounded on all sides by adhesive 6. The adhesive 6 may overlie an end portion of the insulating material 21.

The electrical cable 3 has an exposed portion of electrically conductive wire 30 at one of its ends. The exposed electrically conductive wire 30 at the end of the electrical cable 3 is soldered to the exposed electrically conductive element 20 at the end of the flat connector 2 in the region of the window 6w by solder 5 which may be of any suitable type, for example a solder 5 consisting of 60% tin and 40% lead, or alternatively and preferably a lead-free solder, for example SAC305 or 97Sn3Ag or even pure tin. Alternatively or additionally the connector 2 and wire 30 may be otherwise secured together so as to allow electrical conduction from the connector 2 to the wire 30, and/or *vice versa.*

A strip of adhesive 6a extends about (and completely around) the cable 3 so as to form a continuous fluid seal. The strip of adhesive 6a is located adjacent the exposed electrically conductive wire 30 at the end of the electrical cable 3 and at least a portion thereof lies adjacent a facing portion of the adhesive 6. Preferably, the adhesive 6A does not overlie the window 6w.

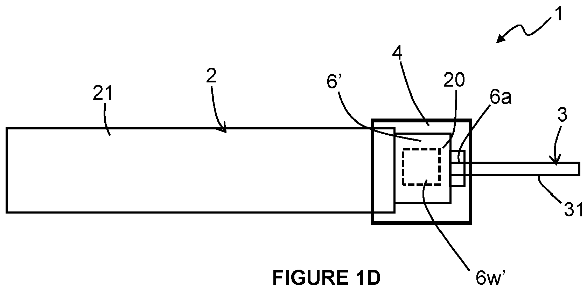

As shown in Figure 1D, the other side of the exposed portion 20e of the flat connector 2 may also have an adhesive 6' secured thereto. The adhesive 6' may also be provided to define a window 6w'. The window 6w' will preferably coincide with the window 6w on the first side (although it may be smaller), the reason for which will be explained below. As can be seen, the adhesive 6a around the cable 3 extends beyond the end of the exposed portion 20e.

The enclosure 4, which is preferably moulded from a thermoplastic such as a polyamide, for example polyamide 6 (otherwise known as Nylon(RTM) 6 or PA6) or polyamide 6/6 (otherwise known as PA66) or polybutylene terephthalate (PBT) or polypropylene (and preferably glass reinforced PA6 or glass-reinforced PA66 or glass-reinforced PBT or glass-reinforced polypropylene) or Macromelt, is suitably sized and configured such that it encases the point of contact between the electrically conductive element 20 and the exposed end 30 of the wire 3 and extends from the flat connector 2 to the electrical cable 3 and over the adhesive 6a. Typically, the enclosure is formed by over-moulding the electrical connection. Whilst the enclosure is shown as being rectangular in plan form, it may be other shapes, for example trapezoidal.

The provision of the adhesive 6 provides a surface which is more amenable to sealing of the electrical connection by the enclosure 4. We have found it particularly advantageous to use a pressure sensitive adhesive 6 such as a fully cured acrylic adhesive. The pressure sensitive adhesive that we prefer to use is 300LSE high strength acrylic adhesive supplied by 3M. Preferably the adhesive has a thickness of less than 100 µm, say 50 µm. The adhesive 6' may comprise a pressure-sensitive adhesive such as a fully cured acrylic adhesive. The pressure sensitive adhesive that we prefer to use is 300LSE high strength acrylic adhesive supplied by 3M. Preferably the adhesive 6' has a thickness of less than 100 µm, say 50 µm.

The manufacture of a heated windscreen entails providing a windscreen laminate comprising separate glass blanks between which are disposed a plurality of heating elements electrically connected to flat connectors of the type described herein. The flat connectors are electrically connected at their free ends to cables which are intended for future connection to a source of electrical power. The windscreen laminate, including the flat connectors and cables joined by an electrical connection, is then heated under vacuum in an autoclave at temperatures of up to 150°C and for durations of around three hours in order to bind together the layers of the laminate (and also, in some cases, to solder electrical connections). It is imperative that the electrical connection is not damaged during this process and further that the electrical connection remains sealed against undesirable elements (particularly water and salt) which might otherwise corrode and hence degrade the connection.

The applicant has found that an electrical connection between a flat connector and an electrical cable and including an enclosure, and using the pressure sensitive adhesive, reliably prevents subsequent ingress of undesirable elements. Without wishing to be bound by any theory it is believed that movement and flexing of the cable and/or of the flat connector during the course of manufacture of the windscreen and automobile (and also during subsequent use of the automobile) may result in cyclical wear of the join between the cable and enclosure and/or of the join between the flat connector and the enclosure. This wear may produce gaps between the enclosure and the cable and/or flat connector through which undesirable elements may ingress. It is further believed that the adhesive 6 (and if present 6a), allows the thermoplastic material of the enclosure to effectively seal the electrical contact.

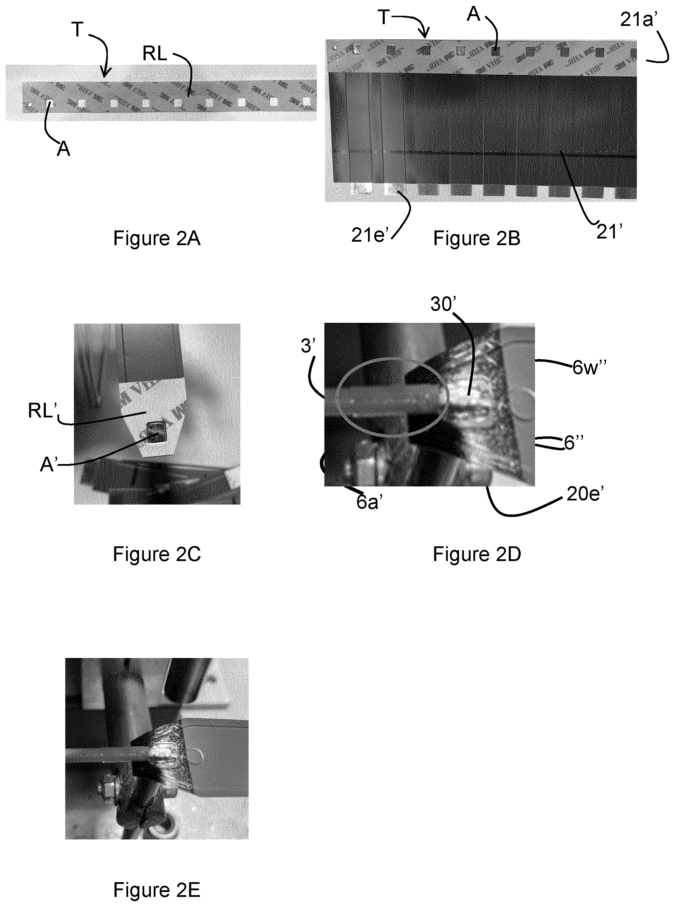

Referring now to Figures 2A to 2D, there is shown sequential steps in a method of forming the electrical connection 1 shown in Figures 1A to 1D.

The method involves a first step (Figure 2A) of perforating a tape T comprising a pressure sensitive adhesive which is provided with a release liner RL to form plural apertures A through both the release liner RL and the adhesive.

In a second step (Figure 2B) an array of elongate flat conductive strips 20' which are longitudinally aligned in side-by-side relations and encapsulated on both sides by a non-conductive polymeric film 21' are provided. The non-conductive polymeric film 21' does not extend to the ends of the flat conductive strip 21' thereby to leave an exposed portion 20e and another exposed portion 21e'. At one end 21a', the tape T is secured to the exposed portion 20e' such that each aperture A is located inboard of the edges of a respective exposed portion 20e'.

A similar tape T (where the apertures may be the same size or smaller) may be secured to the other face of the exposed portion 20e' at the first end 21a'. The apertures A on the two surfaces will generally coincide. Between the adjacent exposed portions 21e' the adhesive of the tapes T will be secured together.

The so formed laminate may be passed through a roller (not shown), for example a heated roller to ensure that the adhesive of the tape T is firmly secured to the exposed portion 21e' and the marginal portion of the non-conductive polymeric film 21' and, where present, the tape T secured to the other surface of the exposed portion 21e' is firmly secured to the exposed portion 21e' and the marginal portion of the non-conductive polymeric film 21'

In a third step (Figure 2C) individual encapsulated flat conductive strips 20' are cut from the array. The cutting stage may shape the exposed end 21e', the adhesive and the release liner RL'. The individual aperture A' is shown coincident with the exposed end 20e'.

In a fourth step (Figure 2D), the release liner RL' is removed to expose the adhesive 6" and a window 6w" corresponding to the aperture A. An exposed end 30' of a conductive cable 3' is presented to the window 6w". An adhesive 6a' provided about the conductive cable 3' lies adjacent, preferably in abutting relations, with the adhesive 6" defining the window 6w". The exposed end 30' carries a solder composition. The conductive cable 3' comprises insulation 31' away from the exposed end 30'. The adhesive 6a' is located about the terminal portion of the insulation 31' to a length of less than 10mm. Accordingly, a first portion of the adhesive 6a' will lie adjacent adhesive 6" and a further portion of the adhesive 6a' will extend beyond the end of the exposed end 20e'. The adhesive is preferably a pressure sensitive acrylic adhesive, which may be 300LSE high strength acrylic adhesive supplied by 3M.

In a fifth step (Figure 2E) heat is applied to melt the solder composition carried by the exposed end 30' of the cable 3' and thereby form an electrical contact between the cable 3' and the flat conductive strip 20'.

Heat is applied to the window provided in the adhesive located on the other major surface of the exposed end 20e' (i.e. the non-shown surface in Figure 2E). The heat applied (typically for 1-2 seconds) is sufficient to melt the solder and cause it to flow. Once heat is removed the solder rapidly cools thereby securing the cable 3' to the flat conductive strip 20' to make a robust electrical connection. The release liner RL on the heated side of the exposed end 20e' may be removed before or after heating. We prefer to remove the release liner RL on the adhesive on the heatable major surface after heating so as to make the window more visible for the application of heat. The window provided in the adhesive located on the other major surface of the exposed end 20e' (i.e. the non-shown surface in Figure 2E) is typically smaller than the window 6w" provided by adhesive 6" as the application of heat can be performed accurately.

The connected part is then moved to an overmoulding machine (not shown) where the electrical contact is overmoulded to make an electrical connection 1 in which the end of the cable 3' and end of the flat connector 20' are encapsulated in thermoplastic material. The cycle time to achieve the overmoulding is typically less than 60s, and may be less than 45s, say around 30s.The provision of the pressure sensitive adhesive on the two major surfaces of the exposed end 20e the marginal surface of the polymeric film 21' and around the cable 3 provides a suitable surface for forming an environmentally stable seal with the overmoulded thermoplastics material. Because the adhesive 6", 6a' does not need to cure (*i.e*. it is not a heat activated or heat cured adhesive) overmoulding cycle times can be reduced. In some cases the connected part may be subjected to a heat stage before overmoulding, for example by passing the connected part through a heat tunnel or storing at an elevated temperature for a period of time. Additionally or alternatively, the parts may be subjected to a heating stage after the second step and before the third step.

### Test results

Electrical connections 1 according to the invention were tested according to the following tests:
**Connector fabrication**
   Electrical connections 1 according to the invention were prepared from a pre-tinned copper strip having a width of 15 mm and a thickness of 100 µm. Polyimide tape (19mm wide, total thickness 45 µm) provided with an epoxy adhesive was secured to either side thereof to leave exposed ends. A pressure sensitive adhesive was secured to both sides of one of the exposed ends, the pressure sensitive adhesive defining an adhesive fee window on both sides of the exposed end. A 2.5mm² Radox (RTM) cable, which was pre-tinned was secured to one of the windows by the application of heat, sufficient to melt the tin and cause the tin material to flow. Removal of the heat allowed the tin to solidify and to secure the cable to the exposed end. The entire connection was overmoulded with nylon 6 to form a flat connector to cable electrical connection.
**Test 1** - **Insulation resistance following forming**
   A 5% salt water solution at approximately 20°C was prepared. Each electrical connection 1 was then tested in turn by partially submerging it in the solution such that the enclosure 4 was submerged in the solution but not the second end of the flat connector 2. The insulation resistance of each electrical connection 1 was tested by measuring the resistance between the free second end of the flat connector 2 and the solution (using an ohmmeter).
   *Result:* 50 electrical connections were tested and all successfully passed this test.
**Test 2** - **Insulation testing following bending cycles**
   Each electrical connection 1 was subjected to cyclic bending by fixing the enclosure 4 and bending the flat connector 2 around the enclosure 4 by an arc of 180°, five times. Each electrical connection 1 was also subjected to cyclic bending by fixing the enclosure 4 and bending the cable 3 around the enclosure 4 by an arc of 180°, five times. The purpose of this bending is to mechanically stress the joins between the enclosure 4 and the flat connector 2 and/or cable 3 and to therefore test the efficacy of the seal provided by the enclosure 4 and the adhesive 6, 6a.
   The same test protocol was used as in Test 1.
   ***Result:*** 50 electrical connections were tested and all successfully passed this test.
**Test 3** - **Insulation resistance following thermal cycling**
   Electrical connections 1 were prepared as described in relation to Test 1.
   Two 5% salt water solutions were prepared, one at a temperature of 65°C, the other at 0°C.
   Each electrical connection 1 was submerged in the first solution for a period of 30 minutes before being transferred to the second solution for another period of 30 minutes. The time taken to transfer the electrical connections 1 between first and second solutions was less than 10 seconds. This procedure was repeated five times in total for each of the electrical connections 1. The purpose of this thermal cycling is to test the efficacy of the seal provided by the enclosure 4 and first and second seals 6a, 6b.
   The insulation resistance of the thus thermally cycled electrical connections 1 was then measured as described above in Test 1.
   ***Result:*** 50 electrical connections were tested and all successfully passed this test.

As will be appreciated, the test results demonstrate that the electrical connections 1 of the invention are able to withstand repeated physical stress as well as thermal cycling stress. The testing of 150 samples with no fails is particularly encouraging.

It will be appreciated by those skilled in the art that several variations to the aforementioned embodiments are envisaged without departing from the scope of the invention. For example, the solder 5 may be lead free and/or may include any suitable combination of solder materials. Although we prefer to use a pressure sensitive acrylic adhesive, other pressure sensitive adhesives may be used. We prefer to use a pressure sensitive adhesive rather than a heat activated adhesive because we have found that using an adhesive which is fully cured before the encapsulation is applied leads to a more robust connection which is less susceptible to environmental ingress.

It will also be appreciated by those skilled in the art that any number of combinations of the aforementioned features and/or those shown in the appended drawings provide clear advantages over the prior art and are therefore within the scope of the invention described herein.

Various aspects of the invention are set out in the following numbered paragraphs:
1. An electrical connection for electrically connecting a flat connector, and an electrical cable, the electrical connection comprising
   a flat connector with an insulated portion and an electrically conductive portion to which is secured a pressure sensitive adhesive defining a window,
   an electrical cable which is secured to the flat connector at the window to provide an electrical contact between the flat connector and the electrical cable, and
   an enclosure encasing the electrical contact.
2. An electrical connection according to paragraph 1, the electrical cable may comprise an electrically conductive core encased in a non-conductive material to provide an exposed portion.
3. An electrical connection according to paragraph 2, wherein the exposed portion of the electrical cable is secured to the window.
4. An electrical connection according to paragraph 1 or 2, wherein the exposed portion of the electrical cable is secured to the window by solder, for example a lead-free solder or a lead-containing solder.
5. An electrical connection according to any preceding numbered paragraph, wherein the electrical cable, for example at least a portion of non-conductive material of the electrical cable, has an adhesive located thereon
6. An electrical connection according to paragraph 5, wherein the adhesive is located fully about the cable.
7. An electrical connection according to paragraph 5 or 6, wherein the adhesive extends from a terminus of the non-conductive material away from the exposed portion of the cable.
8. An electrical connection according to paragraph 5, 6 or 7, wherein the adhesive extends for a distance of less than 10mm, for example from 0.05 to 9.5mm, say 0.1 to 9, 8, 7, 6 mm along the cable.
9. An electrical connection according to any preceding numbered paragraph, wherein the insulated portion of the flat connector comprises polyimide, film.
10. An electrical connection according to any preceding numbered paragraph, wherein the flat connector comprises a flat strip of electrically conductive material, a major portion of the flat strip is covered to provide the insulated portion and a minor portion of the flat strip is not covered to provide the exposed portion.
11. An electrical connection according to any preceding numbered paragraph, wherein the electrically conductive portion of the flat connector has a first major surface and a second major surface.
12. An electrical connection according to paragraph 11, wherein the first major surface is the one to which the cable is secured.
13. An electrical connection according to paragraph 11 or 12, wherein the second major surface of the electrically conductive portion comprises a second adhesive.
14. An electrical connection according to paragraph 13, wherein the second adhesive is located on the second major surface so as to provide a second window.
15. An electrical connection according to paragraph 14, wherein the second window is positioned to correspond to the window.
16. An electrical connection according to any preceding numbered paragraph, wherein the enclosure comprises a unitary body, for example where the unitary body is overmoulded around the point of contact, the cable and the flat connector.
17. A method of forming an electrical connection for electrically connecting a flat connector to an electrical cable, the method comprising:
   providing a flat connector having a an insulated portion and an exposed portion;
   securing a pressure sensitive adhesive to the exposed portion to define a window;
   securing an electrical cable to the window to form an electrical contact; and
   encasing the electrical contact within an enclosure.
18. A method according to paragraph 17, comprising securing the pressure sensitive adhesive on the electrically conductive portion by adhering the pressure sensitive adhesive using a pressure-sensitive adhesive located on a release liner.
19. A method according to paragraph 18, comprising a preliminary step of perforating the release liner and the adhesive located thereon to define a window.
20. A method according to paragraph 18 or 19, comprising providing the release liner and adhesive an adhesive strip.
21. A method according to paragraph 20, comprising perforating the adhesive strip plural times to form a perforated adhesive strip.
22. A method according to any of paragraphs 17 to 21, comprising providing the flat connector as a strip of plural flat connectors, wherein the strip of plural flat connectors are provided such that plural exposed portions are located in side-by-side arrangements.
23. A method according to paragraph 22 when dependent on paragraph 21, comprising securing the perforated adhesive strip to a first side of the plural exposed portions.
24. A method according to paragraph 23, comprising securing a further adhesive strip, for example a further perforated adhesive strip, to a second side of the plural exposed portions.
25. A windscreen assembly comprising an electrical connection as set out in any of paragraphs 1 to 16, which may further comprise glass laminates and heating elements.

## Claims

1. An electrical connection for electrically connecting a flat connector and an electrical cable, the electrical connection comprising
a flat connector with an insulated portion and an electrically conductive portion to which is secured a pressure sensitive adhesive defining a window,
an electrical cable which is secured to the flat connector at the window to provide an electrical contact between the flat connector and the electrical cable, and
an enclosure encasing the electrical contact.

2. An electrical connection according to Claim 1, the electrical cable may comprise an electrically conductive core encased in a non-conductive material to provide an exposed portion, the exposed portion of the electrical cable being secured to the window.

3. An electrical connection according to Claim 1 or 2, wherein the exposed portion of the electrical cable is secured to the window by solder, for example a lead-free solder or a lead-containing solder.

4. An electrical connection according to any preceding Claim, wherein the electrical cable, for example at least a portion of non-conductive material of the electrical cable, has an adhesive located thereon, preferably wherein the adhesive is located fully about the cable.

5. An electrical connection according to Claim 4, wherein the adhesive extends from a terminus of the non-conductive material away from the exposed portion of the cable.

6. An electrical connection according to Claim 4 or 5, wherein the adhesive located on the electrical cable has a first portion which lies adjacent the pressure sensitive adhesive and a second portion which extends beyond the end of the electrically conductive portion and/or the adhesive extends for a distance of less than 10mm, for example from 0.05 to 9.5mm, say 0.1 to 9, 8, 7, 6 mm along the cable

7. An electrical connection according to any preceding Claim, wherein the insulated portion of the flat connector comprises polyimide film.

8. An electrical connection according to any preceding Claim, wherein the flat connector comprises a flat strip of electrically conductive material, a major portion of the flat strip is covered to provide the insulated portion and a minor portion of the flat strip is not covered to provide the exposed portion.

9. An electrical connection according to any preceding Claim, wherein the electrically conductive portion of the flat connector has a first major surface and a second major surface and the cable is secured to the first major surface.

10. An electrical connection according to Claim 9, wherein the second major surface of the electrically conductive portion comprises a second adhesive.

11. An electrical connection according to Claim 10, wherein the second adhesive is located on the second major surface so as to provide a second window and wherein the second window may be positioned to correspond to the window.

12. An electrical connection according to any preceding Claim , wherein the enclosure comprises a unitary body, for example where the unitary body is overmoulded around the point of contact, the cable and the flat connector.

13. A method of forming an electrical connection for electrically connecting a flat connector to an electrical cable, the method comprising:
providing a flat connector having a an insulated portion and an exposed portion;
securing a pressure sensitive adhesive to the exposed portion to define a window;
securing an electrical cable to the window to form an electrical contact; and
encasing the electrical contact within an enclosure, for example by overmoulding.

14. A method according to Claim 13, comprising one or more of the further steps:
a. a preliminary step of perforating the adhesive located to define the window;
b. providing the flat connector as a strip of plural flat connectors, wherein the strip of plural flat connectors are provided such that plural exposed portions are located in side-by-side arrangements and securing a tape of adhesive to said plural exposed portions;
c. securing a further adhesive strip, for example a further perforated adhesive strip, to a second side of the exposed portion; and
d. locating an adhesive around a portion of the cable.

15. A windscreen assembly comprising an electrical connection as set out in any of Claims 1 to 12, which may further comprise glass lamina and heating elements.
